# EUROPEAN PATENT APPLICATION

(11) **EP 4 617 125 A1**
(43) Date of publication of application: **17.09.2025**
(21) Application number: 23888363.1
(22) Date of filing: 21.09.2023
(51) Int. Cl.: B60R 22/28, B60R 22/46

(54) **SEATBELT RETRACTOR**

(30) Priority: 08.11.2022 JP 2022178642
(71) Applicant: Autoliv Development AB, 44783 Vargarda (SE)
(72) Inventor: ONO, Katsuyasu, Yokohama-shi, Kanagawa 222-8580 (JP); KAWASAKI, Shuji, Yokohama-shi, Kanagawa 222-8580 (JP)
(74) Representative: Müller Verweyen
(86) International application number: PCT/JP2023/034353
(87) International publication number: WO 2024/101010

(57) **Abstract**

To provide a seatbelt retractor which, using a simple configuration, can suppress miscalculation of the payout rotational speed of the spindle and increase the constraining force of a seatbelt during a vehicle collision. The seatbelt retractor 1 includes a frame 30, a spindle 70, a pretensioner 20, a tread head 40, a torsion bar 50, and a lock ring 80. The spindle 70 is configured to rotate in the winding direction during the operation of the pretensioner 20 and, after the operation of the pretensioner 20 stops, to rotate in the payout direction of the belt due to the load of an occupant applied to the belt, and the lock ring 80 is configured to rotate in the winding direction with the spindle 70 during the operation of the pretensioner 20 and, after the operation of the pretensioner 20 stops, is fixed to the frame 30 when rotating in the unwinding direction due to the payout rotation of the spindle 70.

## Description

### TECHNICAL FIELD

The present disclosure relates to a seatbelt retractor for a vehicle.

### BACKGROUND ART

During a vehicle collision, the injury sustained by the occupant increases as the collision progresses. In order to reduce such injuries sustained by the occupant, a vehicle is generally includes a seatbelt retractor including a spindle assembly and a pretensioner for driving the spindle assembly. Spindle assemblies are known to be configured such that, during a vehicle collision, the seatbelt is instantaneously wound due to the operation of the pretensioner to effectively constrain the occupant's body, and, after the operation of the pretensioner has stopped, the seatbelt is paid out in order to reduce a load on the occupant's chest (refer to Patent Document 1).

### PRIOR ART LITERATURE

### PATENT DOCUMENTS

Patent Document 1: JP 2008-174049 A

### SUMMARY OF INVENTION

### PROBLEM TO BE SOLVED BY INVENTION

Incidentally, although, in a retractor such as the seatbelt retractor described in Patent Document 1, a tread head of the spindle assembly begins to rotate due to the operation of the pretensioner, other configurations of the spindle assembly that are supposed to begin rotating together with the tread head (for example, the spindle) may begin to rotate with a delay relative to the tread head due to a delay in the transmission of force from the pretensioner. That is, relative rotation (phase difference) may occur between the tread head and the spindle. Due to such relative rotation, a torsion bar having one end fixed to the tread head and the other end fixed to the spindle may be pre-twisted. On the other hand, in order to ensure a constraining force on the occupant by the seatbelt during a vehicle collision, the payout rotational speed of the spindle is set in advance. However, when pre-twisting of the torsion bar occurs, the rotational speed of the spindle caused by the pre-twisting may also be miscalculated as the payout rotational speed of the spindle.

An object of the present disclosure is to provide a seatbelt retractor which, by employing a simple configuration, can suppress miscalculation of the payout rotational speed of the spindle and increase the constraining force of the seatbelt during a vehicle collision.

### MEANS FOR SOLVING PROBLEM

A seatbelt retractor according to one aspect of the present disclosure includes a frame, a spindle around which a belt is wound, a pretensioner that operates to transmit a force, which causes the spindle to rotate in a winding direction of the belt, to the spindle via a transmission path, a tread head that is provided in the transmission path and rotates in the winding direction upon receiving force from the pretensioner, a torsion bar that is provided in the transmission path and transmits the rotation of the tread head caused by the pretensioner to the spindle, and a lock ring provided between the tread head and the spindle, wherein the spindle is configured to rotate in the winding direction during operation of the pretensioner, and, after the operation of the pretensioner stops, to rotate in a payout direction by a load of an occupant being applied to the belt, the lock ring is configured to rotate in the winding direction together with the spindle during the operation of the pretensioner, and, after the operation of the pretensioner stops, is constrained by the frame when rotating in the payout direction due to payout rotation of the spindle.

According to this aspect, the payout rotation speed of the spindle can be calculated based on the relative rotation between the lock ring and the spindle by a lock ring having a simple configuration. Furthermore, by suppressing the occurrence of relative rotation between the lock ring and the spindle during the operation of the pretensioner, even if pre-twisting of the torsion bar occurs during the operation of the pretensioner, the pre-twisting will not be calculated as the payout rotation speed of the spindle, thereby enabling suppression of miscalculation of the payout rotation speed of the spindle caused by the pre-twisting of the torsion bar. As a result, the calculation accuracy of the payout rotation speed of the spindle can be increased and the constraining force of the seatbelt on the occupant during a vehicle collision can be increased.

A seatbelt retractor according to another aspect of the present disclosure includes a frame, a spindle around which a belt is wound, a pretensioner that operates to transmit a force, which causes the spindle to rotate in a winding direction of the belt, to the spindle via a transmission path, a tread head that is provided in the transmission path and rotates in the winding direction upon receiving the force from the pretensioner, a torsion bar that is provided in the transmission path and transmits the rotation of the tread head caused by the pretensioner to the spindle, and a lock ring provided between the tread head and the spindle, wherein, in an emergency, relative displacement occurs between the spindle and the tread head due to twisting of the torsion bar, and when the spindle rotates in a payout direction of the belt due to a load of an occupant being applied to the belt, the lock ring integrally rotates together with the spindle due to payout rotation of the spindle and is constrained by the frame.

According to this aspect, the payout rotation speed of the spindle can be calculated based on the relative rotation between the lock ring and the spindle using a simple configuration. Furthermore, when the spindle is rotated in the payout direction of the belt by the load of the occupant being applied to the belt, the lock ring together with the spindle suppress rotation, thereby enabling the suppression of miscalculation of the payout rotation speed of the spindle, at least that due to the calculation of the relative rotational speed of the spindle with respect to the lock ring. As a result, the calculation accuracy of the payout rotation speed of the spindle can be increased and the constraining force of the seatbelt on the occupant during a vehicle collision can be increased.

### EFFECT OF INVENTION

According to the seatbelt retractor of the present disclosure, by employing a simple configuration, miscalculation of the payout rotational speed of the spindle can be suppressed, and the constraining force of the seatbelt during a vehicle collision can be increased.

### BRIEF DESCRIPTION OF DRAWINGS

[FIG. 1] An exploded perspective view illustrating the configuration of the seatbelt retractor according to a first embodiment.
[FIG. 2] A cross-sectional view illustrating the configuration of the seatbelt retractor according to the first embodiment.
[FIG. 3] An exploded perspective view illustrating a state of the spindle assembly of the seatbelt retractor according to the first embodiment as viewed from one direction.
[FIG. 4] An exploded perspective view of the spindle assembly of the seatbelt retractor according to the first embodiment as viewed from another direction.
[FIG. 5A] A figure illustrating a state of a pawl prior to operation of a pretensioner of the seatbelt retractor according to the first embodiment.
[FIG. 5B] A figure illustrating a state of a pawl during operation of the pretensioner of the seatbelt retractor according to the first embodiment.
[FIG. 5C] A figure illustrating a state of the pawl after the operation of the pretensioner of the seatbelt retractor according to the first embodiment has stopped.
[FIG. 6] A figure illustrating a state of a sliding movement of a sleeve of the seatbelt retractor according to the first embodiment.
[FIG. 7A] A figure illustrating a state prior to the start of payout rotation of the spindle of the seatbelt retractor according to the first embodiment0
[FIG. 7B] A figure illustrating a twisted state of the first bar and the position of the sleeve when the spindle of the seatbelt retractor according to the first embodiment has rotated 90 degrees in a payout direction.
[FIG. 7C] A figure illustrating a twisted state of the first bar and a position of the sleeve when the spindle of the seatbelt retractor according to the first embodiment has rotated 135° in the payout direction.
[FIG. 7D] A figure illustrating a twisted state of the first bar and a position of the sleeve when the spindle of the seatbelt retractor according to the first embodiment has rotated 200° in the payout direction.
[FIG. 7E] A figure illustrating a twisted state of the first bar and a second bar and a position of the sleeve when the spindle of the seatbelt retractor according to the first embodiment has rotated 720° in the payout direction.
[FIG. 7F] A figure illustrating a twisted state of the first bar and the second bar and the position of the sleeve when the spindle of the seatbelt retractor according to the first embodiment has rotated 1080° in the payout direction.
[FIG. 8] An exploded perspective view illustrating the configuration of a seatbelt retractor according to a second embodiment.
[FIG. 9] A cross-sectional view illustrating the configuration of the seatbelt retractor according to the second embodiment.
[FIG. 10] A figure illustrating a mounted state of an energy-absorbing member of the seatbelt retractor according to the second embodiment.
[FIG. 11A] A figure illustrating a state of a pawl prior to operation of a pretensioner of a seatbelt retractor according to a third embodiment.
[FIG. 11B] A figure illustrating a state of the pawl during operation of the pretensioner of the seatbelt retractor according to the third embodiment.
[FIG. 11C] A figure illustrating a state of the pawl after the operation of the pretensioner of the seatbelt retractor according to the third embodiment has stopped.

### EMBODIMENTS OF INVENTION

A seatbelt retractor according to a preferred embodiment of the present invention will be described with reference to the accompanying drawings. In the present document, the direction in which the seatbelt is wound is defined as "winding direction D1", and the direction in which the seatbelt is paid out is defined as "payout direction D2". Furthermore, the times when the vehicle is about to collide and when the vehicle is colliding are collectively defined as "during a vehicle collision", and the states of the vehicle other than "during a vehicle collision" are defined as a "normal state".

### [First Embodiment]

### <Seatbelt Retractor 1>

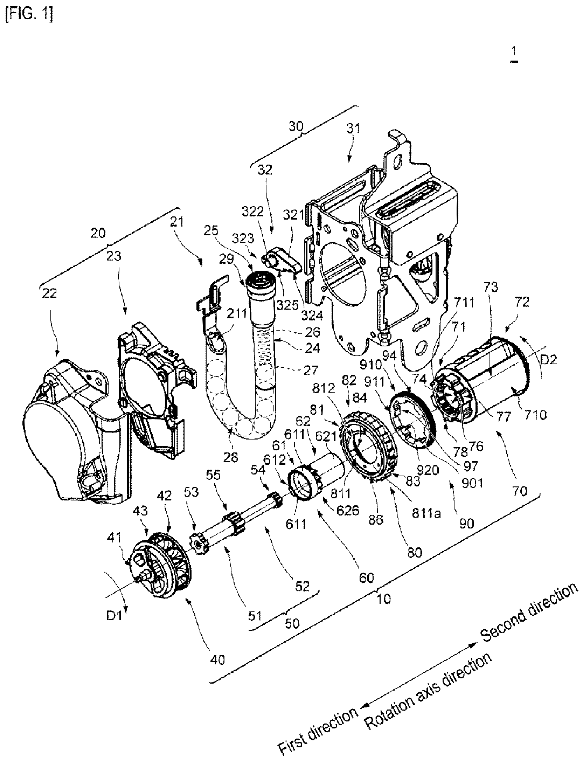

First, the configuration of a seatbelt retractor 1 according to the first embodiment will be described with reference to FIGS. 1 to 5C.

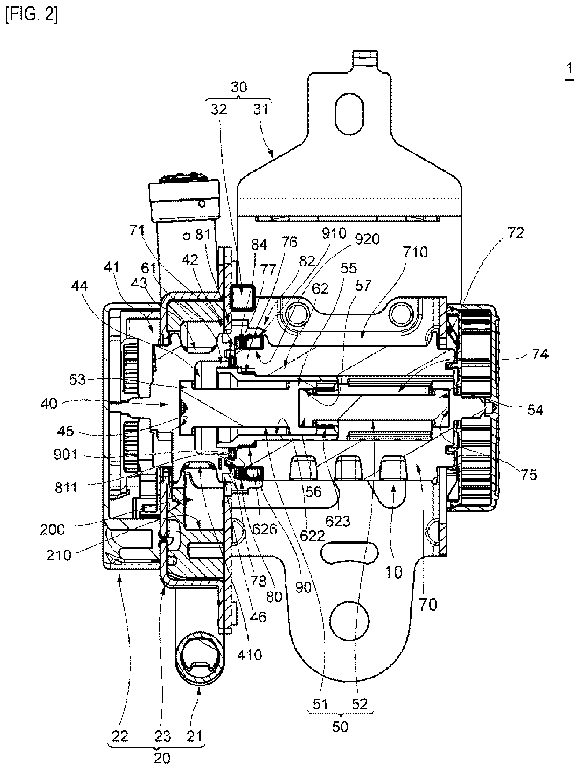

As illustrated in FIGS. 1 and 2, the seatbelt retractor 1 includes a spindle assembly 10 around which a seatbelt (not illustrated) is wound, a pretensioner 20, which causes the winding of a seatbelt by the spindle assembly 10 to operate, and a frame 30 that supports both the spindle assembly 10 and the pretensioner 20.

Furthermore, the seatbelt retractor 1 includes a winding spring device (not illustrated) that biases the spindle assembly 10 in the winding direction D1 of the seatbelt, an acceleration sensor that detects a horizontal acceleration of the vehicle, and a locking mechanism that locks a payout operation of the seatbelt in response to an acceleration detected by the acceleration sensor.

### (Spindle Assembly 10)

The spindle assembly 10 is an example of a configuration that, after being rotated in the winding direction D1 by pretensioner 20 to wind the seatbelt, can be rotated in the payout direction D2 to pay out the seatbelt by the load of the occupant being applied to the seatbelt. The spindle assembly 10 is rotatably supported by the frame 30. Hereinafter, the rotation of the spindle assembly 10 in the winding direction D1 will be referred to as "winding rotation", and the rotation in the payout direction D2 will be referred to as "payout rotation".

Furthermore, the spindle assembly 10 is provided with a stopping device (not illustrated). This stopping device is configured to cause the operation of the pretensioner 20 to stop and to cause the rotation of a tread head 40 of the spindle assembly 10, as described later, to stop. Note that the spindle assembly 10 will be described in detail later.

### (Pretensioner 20)

The pretensioner 20 is an example of a device that operates to transmit a force, which rotates the spindle assembly 10 in the winding direction D1, to the spindle assembly 10 via a transmission path. Here, the transmission path is formed by a portion of the configuration of the spindle assembly 10. As illustrated in FIGS. 1 and 2, the pretensioner 20 includes a drive device 21 that drives the winding rotation of the spindle assembly 10, a drive cover 22 that supports the drive device 21, and a distance plate 23.

As illustrated in FIG. 1, the drive device 21 includes a tube housing 24 that is attached to the frame 30, a gas generator 25, a spring 26, a piston 27, and a plurality of balls 28 as a mass body, all of which are provided within the tube housing 24, along with a cap 29 for fixing the tube housing 24.

The gas generator 25, the piston 27, and the cap 29 are configured to eject the plurality of balls 28 from the tube housing 24. The plurality of balls 28 are configured to transmit the actuating force from the piston 27 to the tread head 40, which is positioned in the transmission path of the spindle assembly 10, as described later. The spring 26 is configured to prevent the occurrence of abnormal noises caused by rattling of the plurality of balls 28 within the tube housing 24 in the normal state.

As illustrated in FIG. 2, the drive cover 22 is configured to rotatably support one end of tread head 40. As illustrated in FIG. 2, the distance plate 23 has one end surface attached to the drive cover 22, and the other end surface fixed to the frame 30 so as to cover tube housing 24. In other words, the drive cover 22 is fixed to the frame 30 via the distance plate 23.

As illustrated in FIG. 2, the inner space of the assembly of drive cover 22 and distance plate 23 constitutes a space 200 for accommodating the tread head 40. An inner circumferential surface 210 of the space 200 and a pinion 410 of the tread head 40, as described later, constitute a movement path of the plurality of balls 28 of the drive device 21. The movement path is connected to the drive device 21 via an open end 211 of the tube housing 24.

### (Frame 30)

When the seatbelt retractor 1 is provided in a vehicle, the frame 30 is fixed to the vehicle. As illustrated in FIGS. 1 and 2, the frame 30 includes a frame body 31 and a pawl 32 provided on the frame body 31.

The frame body 31 is configured to fix the pretensioner 20 and to accommodate the spindle assembly 10. The pawl 32 is configured to restrict the rotational direction of a lock ring 80 of spindle assembly 10, as described later.

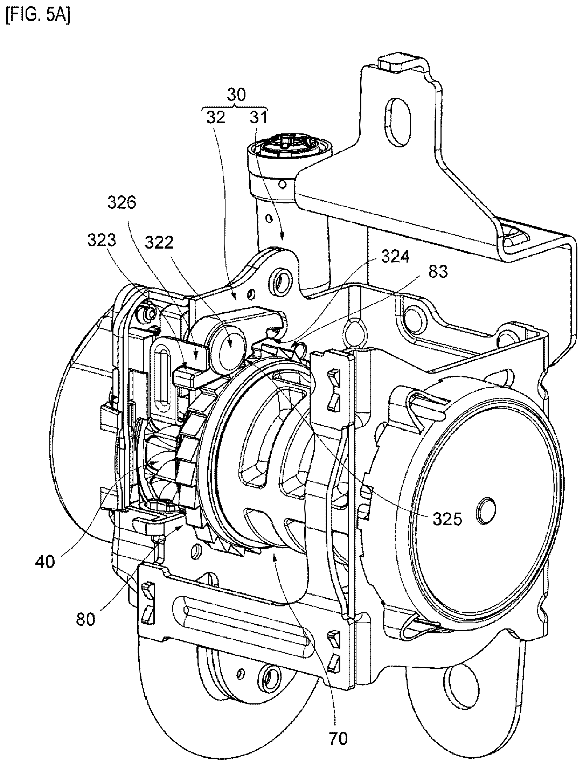

As illustrated in FIGS. 1 and 5A, the pawl 32 includes a pawl body 321, a rotation shaft 322 that rotatably supports the pawl body 321, a spring device 323 that biases the pawl body 321 so as to press the pawl body 321 against the lock ring 80 of the spindle assembly 10, as described later, and a pawl stopper 326. The pawl body 321 includes a claw portion 324 and a flat portion 325.

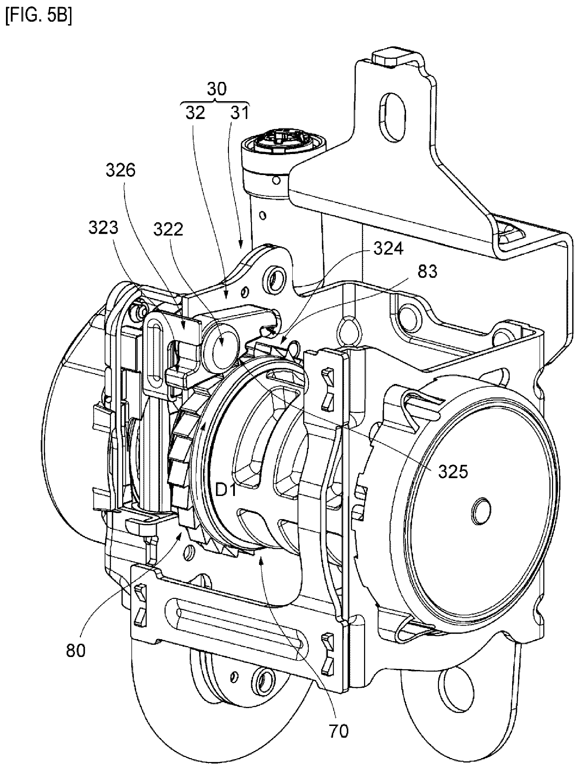

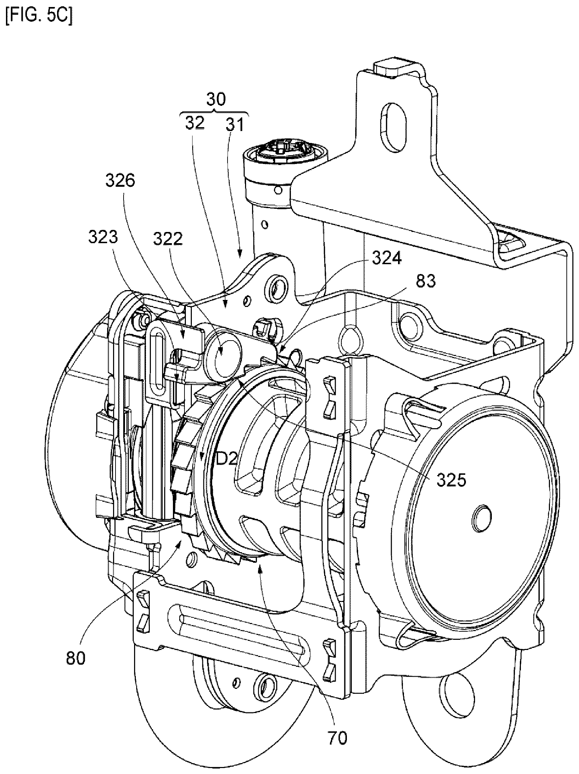

The claw portion 324 is an example of an engagement portion provided on the frame 30 for engaging with the lock ring 80 of the spindle assembly 10, as described later. Prior to operation of the pretensioner 20, the pawl 32 is fixed, as illustrated in FIG. 5A, in a position where it does not engage with ratchet teeth 83 of the lock ring 80, as described later, by the pawl stopper 326. When the pretensioner 20 operates and the spindle 70 rotates in the winding direction D1, due to the operation of the pretensioner 20, the pawl stopper 326 moves from the position illustrated in FIG. 5A to the position illustrated in FIG. 5B. Thereby, as illustrated in FIG. 5C, the pawl 32 is rotated by the spring device 323 in a direction such as engages with the ratchet teeth 83 of the lock ring 80. Then, the pawl 32 permits rotation of the lock ring 80 and the spindle 70 in the winding direction D1 by contact between the flat portion 325 and the ratchet teeth 83 of the lock ring 80. On the other hand, when the spindle 70 rotates in the payout direction D2, the pawl 32 engages with the ratchet teeth 83 of the lock ring 80, as illustrated in FIG. 5C, and obstructs rotation of the lock ring 80 and the spindle 70 in the payout direction D2. In this way, the lock ring 80 is constrained by the frame 30 due to the pawl 32.

The pretensioner 20 operates during a vehicle collision. Specifically, due an ignition of the gas generator 25, a gas pressure inside the tube housing 24 rises, causing the balls 28 in the tube housing 24 to be pushed by the piston 27, ejected from the opening end 211, and entered into the movement path. Then, the balls 28 that have entered the movement path engage with a pinion 43 of the tread head 40, as described later, thereby transferring the actuating force from the piston 27 to the transmission path where the tread head 40 is disposed and causing the spindle assembly 10 to rotate in the winding direction D1, thus winding the seatbelt. Afterwards, when the ejection of the plurality of balls 28 stops, the operation of the pretensioner 20 stops. The stopping device operates along with this, and the rotation of the tread head 40 is stopped. Then, after the winding of the seatbelt by the spindle assembly 10 is stopped, the portion of the spindle assembly 10 is rotated in the payout direction D2 by a load of the occupant applied to the seatbelt, then stops. Note that the operation of the spindle assembly 10 will be described in detail later.

In the following description, the rotation of the spindle assembly 10 in the winding direction D1 during the operation of the pretensioner 20 may be referred to as "winding rotation", and the process by which the spindle assembly 10 performs the winding rotation may be referred to as the "winding process". The rotation of the portion of the spindle assembly 10 in the payout direction D2 after the operation of the pretensioner 20 is stopped may be referred to as "payout rotation", and the process by which the spindle assembly 10 performs the payout rotation may be referred to as the "payout process". Furthermore, the time when the lock ring 80 attempts to rotate in the payout direction D2 and the time when the lock ring 80 has rotated slightly in the payout direction D2 may be collectively referred to as the "payout rotation start time" of the lock ring 80.

### [Configuration of Spindle Assembly 10]

Next, the configuration of the spindle assembly 10 will be described in detail with reference to FIG. 1 to FIG. 7F.

As illustrated in FIGS. 1 and 2, the spindle assembly 10 includes a spindle 70 around which the seatbelt is wound, the tread head 40, a torsion bar 50, and a sleeve 60 that are provided in a transmission path that transmits force from the pretensioner 20 to the spindle 70, a lock ring 80 provided between the tread head 40 and the spindle 70, and a stopper 90 that may cause the payout rotation of the spindle 70 to stop.

### (Spindle 70)

The spindle 70 is an example of a configuration for winding the seatbelt. The spindle 70 has a cylindrical shape. As illustrated in FIGS. 1 to 4, the spindle 70 includes an opening end 71, a closed end 72 on the opposite side of the opening end 71, a mounting portion 73, provided on an outer peripheral surface 710 of the cylinder, for mounting the seatbelt, an internal space 74 formed inside the cylinder to accommodate an end portion of the torsion bar 50, a groove 75 provided on the internal space 74 side of the closed end 72 to engage with the end portion of the torsion bar 50, and a second engagement receiving portion 76 provided on the inner peripheral surface of the cylinder to engage with the sleeve 60.

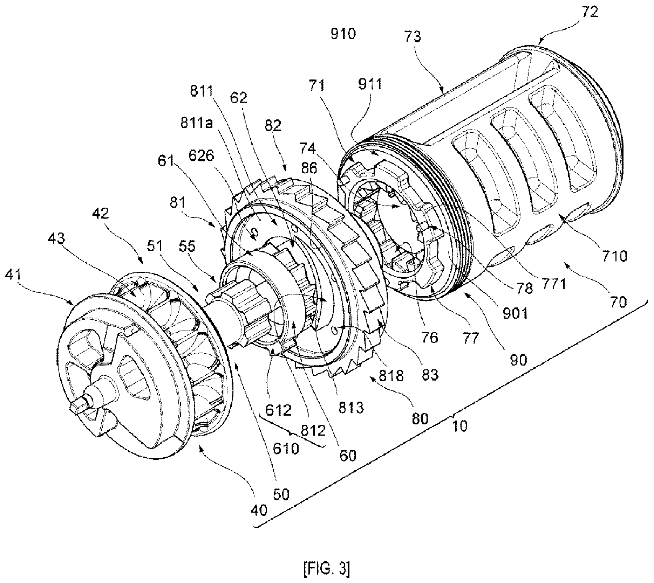

The groove 75 has, for example, a Torx shape. As illustrated in FIGS. 1 and 3, the outer peripheral surface of the opening end 71 is provided with an outer peripheral Torx portion 77 for engaging an inner peripheral Torx portion 93 of the stopper 90, as described later. As illustrated in FIGS. 1 and 3, an end surface 771 of the outer peripheral Torx portion 77 is provided with a mounting pin 78 for engaging the lock ring 80.

The mounting pin 78 is an example of a first mounting portion of a mounting portion for mounting the lock ring 80 to the spindle 70. The mounting pin 78 is inserted into a mounting hole 818 of the lock ring 80, as described later, and is connected to the mounting hole 818, thereby realizing mounting of the lock ring 80 to the spindle 70. Furthermore, the mounting pin 78 is a thin pin and is configured to be easily sheared when relative rotation of the spindle 70 and the lock ring 80 occurs. The shearing of the mounting pin 78 releases the connection between the spindle 70 and the lock ring 80.

### (Tread Head 40)

The tread head 40 is configured to rotate in the winding direction D1 from the force of the pretensioner 20, being provided in one example, that is, at the most upstream side of the transmission path. The tread head 40 has a cylindrical shape. As illustrated in FIGS. 1 to 4, the tread head 40 includes a closed end 41, which is rotatably attached to the drive cover 22 of the pretensioner 20, an open end 42 on the opposite side of the closed end 41, the pinion 43 formed on the outer peripheral surface of the cylinder, an internal space 44 formed inside the cylinder to accommodate another portion of the torsion bar 50, and a groove 45 formed on the internal space 44 side of the closed end 41 to engage with the other end of the torsion bar 50.

The groove 45 has, for example, a Torx shape. As illustrated in FIG. 2, the open end 42 is provided with a first mounting portion 46 for engaging with one end 81 of the lock ring 80, as described later. Furthermore, when the operation of the pretensioner 20 is stopped by the stopping device (not illustrated), the tread head 40 stops the rotation relative to the frame body 31.

### (Torsion Bar 50)

The torsion bar 50 is an example of a configuration that transmits the winding rotation of the tread head 40 to the sleeve 60. As illustrated in FIGS. 1 and 2, the torsion bar 50 has a first bar 51 and a second bar 52 disposed coaxially. The first bar 51 and the second bar 52 are separate components having different properties. The torsional rigidity of the first bar 51 is greater than the torsional rigidity of the second bar 52. In the example illustrated in FIGS. 1 and 2, the first bar 51 is formed to be thicker than the second bar 52.

As illustrated in FIGS. 1 and 2, the first bar 51 includes a first head-side end portion 53 fixed to the groove 45 of the tread head 40, and a first sleeve-side end portion 55 fixed to the inner peripheral surface of the sleeve 60. As illustrated in FIG. 2, the first sleeve-side end portion 55 is provided with a groove 57. As illustrated in FIGS. 1 and 2, the second bar 52 includes a second spindle-side end portion 54 fixed to the spindle 70, and a second sleeve-side end portion 56 attached to the first sleeve-side end portion 55.

The first head-side end portion 53, the first sleeve-side end portion 55, and the second spindle-side end portion 54 each have a Torx shape. The first sleeve-side end portion 55 is an example of a first engagement receiving portion for engaging with a first engagement portion 623 of the sleeve 60, as described later. The first sleeve-side end portion 55 is configured to be able to be slid to the first engagement portion 623 in a rotation axis direction, without relative rotation.

The second sleeve-side end portion 56 is press-fitted into a groove 57 of the first sleeve-side end portion 55, and is coupled to the first sleeve-side end portion 55. In other words, the first bar 51 and the second bar 52 are integrally connected, without relative rotation, by the second sleeve-side end portion 56 being coupled to the first sleeve-side end portion 55.

Note that, although the torsion bar 50 has been described as being composed of two bars, the torsion bar 50 may have three or more bars, or may have parts of a single bar that have different properties along the longitudinal direction of the bar. Furthermore, the method of connecting the first bar 51 and the second bar 52 is not limited to press-fitting, and may be another connection method such as welding.

### (Sleeve 60)

The sleeve 60 is an example of a configuration capable of transmitting the winding rotation of the first bar 51 of the torsion bar 50 to the spindle 70. Furthermore, the sleeve 60 is also configured, in the transmission path, to be coupled to the outer peripheral surface of the first bar 51 (the first sleeve-side end portion 55), and to be able to engage with and disengage from the spindle 70. Specifically, the sleeve 60 is coupled to the spindle 70 so as to rotate the spindle 70 in the winding direction D1 during operation of the pretensioner 20, and is configured to separate from the spindle 70, after a predetermined stroke, by the spindle 70 being rotated in the payout direction D2 of the belt after the operation of the pretensioner 20 stops. Here, the predetermined stroke has, for example, a predetermined angle wherein the sleeve 60 has been rotated in the payout direction D2 by the payout rotation of the spindle 70.

Furthermore, the sleeve 60 has a cylindrical shape. As illustrated in FIGS. 1 to 4, the sleeve 60 has a first part 61 including an open end that faces the tread head 40, and a second part 62 including an open end that is inserted into the spindle 70. The diameter of the outer peripheral surface 611 of the first part 61 is larger than the diameter of an outer peripheral surface 621 of the second part 62. Furthermore, the sleeve 60 is configured to engage with the spindle 70 via a second engagement portion 626 of the second part 62, as described later.

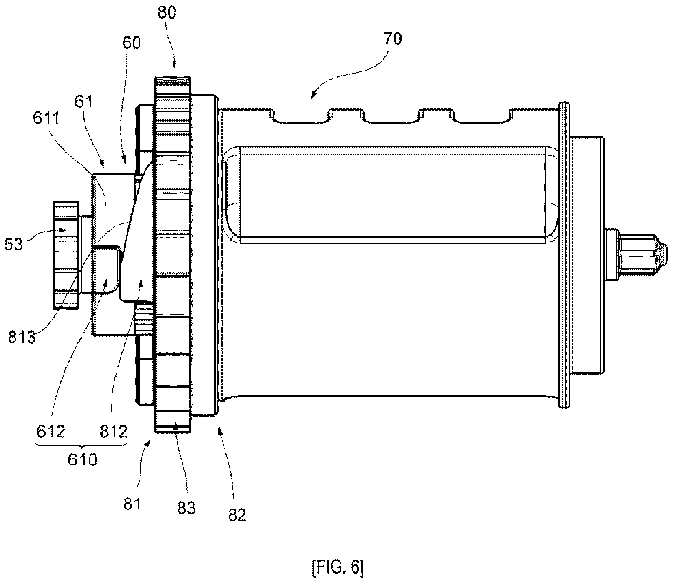

As illustrated in FIG. 3, a protrusion 612 is provided on an outer peripheral surface 611 of the first part 61. As illustrated in FIGS. 3 and 6, the protrusion 612 together with a cam 812 provided on the lock ring 80, as described later, constitute a moving portion 610. When the moving portion 610 functions, the moving portion 610 causes the sleeve 60 to move in a first direction (refer to FIG. 1), thereby separating the sleeve 60 from the spindle 70. Note that the protrusion 612 is an example of a first moving portion of the moving portion 610, and the cam 812 is an example of a second moving portion of the moving portion 610. Furthermore, the operation of the moving portion 610 when functioning will be described in detail in the description of the operation of the spindle assembly 10, as described later.

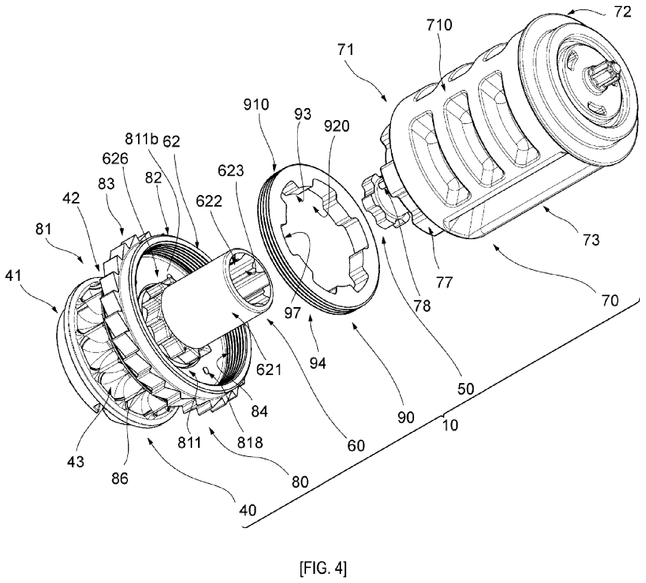

As illustrated in FIGS. 2 and 4, an inner peripheral surface 622 of the second part 62 is provided with the first engagement portion 623. The first engagement portion 623 has a Torx shape corresponding to the shape of the first sleeve-side end portion 55 of the first bar 51. The first engagement portion 623 is capable of being connected to the first sleeve-side end portion 55 of the first bar 51 so as not to rotate relative thereto and to be slidable in the rotation axis direction (refer to FIG. 1).

As illustrated in FIGS. 1 and 3, the outer peripheral surface 621 of the second part 62 is provided with a second engagement portion 626, which engages with the second engagement receiving portion 76 of the spindle 70. The second engagement portion 626 is capable of being connected to the second engagement receiving portion 76 of the spindle 70 so as not to rotate relative thereto and to be slidable in the rotation axis direction (refer to FIG. 1). The second engagement portion 626 is also configured to be able to engage with and disengage from the second engagement receiving portion 76 of the spindle 70.

### (Lock Ring 80)

The lock ring 80 is an example of a configuration used for detecting the payout rotational speed of the spindle 70. During the operation of the pretensioner 20, the lock ring 80 rotates in the winding direction D1 together with the spindle 70. After the operation of the pretensioner 20 stops, the lock ring 80 rotates a predetermined number of times in the payout direction D2 due to the payout rotation of the spindle 70. After rotating a predetermined number of times in the payout direction D2, the lock ring 80 is brought to a stop by the pawl 32.

The lock ring 80 has a ring shape. As illustrated in FIG. 2, the lock ring 80 is provided between the tread head 40 and the spindle 70. As illustrated in FIGS. 1 to 4, the lock ring 80 has one end 81 that faces the tread head 40, an other end 82, which is an open end that faces the spindle 70, the ratchet teeth 83 formed on an outer peripheral surface 810 of the ring, and an internal thread 84 formed on an inner peripheral surface 820 of the ring.

As illustrated in FIG. 1, the one end 81 has an end surface plate 811. As illustrated in FIGS. 1, 3, and 4, the end surface plate 811 includes a first end surface 811a that faces the first direction and a second end surface 811b that faces the second direction. The first end surface 811a is provided with a second mounting portion 86 for attaching the lock ring 80 to the outer periphery of the first mounting portion 46 of the tread head 40. The lock ring 80 is supported by the tread head 40 due to the attachment between the first mounting portion 46 and the second mounting portion 86.

Furthermore, as illustrated in FIGS. 1 and 3, the one end 81 is formed having the mounting hole 818 pass through in the thickness direction of the end surface plate 811. The mounting hole 818 is an example of a mounting portion (second mounting portion) for attaching the lock ring 80 to the spindle 70. Furthermore, the mounting hole 818 is connected to the mounting pin 78 during the operation of the pretensioner 20, and is configured such that, after the operation of the pretensioner 20 stops, the mounting pin 78 is sheared by the relative rotation between the lock ring 80 and the spindle 70. In this way, the lock ring 80 is attached to the spindle 70, during the operation of the pretensioner 20, and separates from the spindle 70 after the operation of the pretensioner 20 stops.

Furthermore, as illustrated in FIGS. 1 and 3, the first end surface 811a of the one end 81 is provided with the cam 812 corresponding to the protrusion 612 of the sleeve 60. The cam 812 is an example of a second moving portion corresponding to the protrusion 612 of the sleeve 60. Furthermore, the cam 812 is an example of a cam structure. Here, the cam configuration may be a cam groove or the like instead of a configuration such as that of the cam 812.

The internal thread 84 is configured to screw together with an external thread 94 of the stopper 90, as described later. Furthermore, as illustrated in FIG. 4, the internal thread 84 is formed from the other end 82 to the second end surface 811b. The internal thread 84 of this manner enables an end portion 911 of the stopper 90 to be caused to be brought into contact with the second end surface 811b at a predetermined rotational speed, thereby fixing the stopper 90 so that it does not rotate relative to the lock ring 80.

The ratchet teeth 83 are an example of an engagement receiving portion that is capable of engaging with the claw portion 324 of the pawl 32. The ratchet teeth 83, together with the pawl 32, constitute a locking mechanism that stops payout rotation of the lock ring 80. In the winding process, the ratchet teeth 83 of the lock ring 80 and the claw portion 324 of the pawl 32 do not engage, which permits winding rotation of the lock ring 80 by both. On the other hand, when the lock ring 80 is rotated in the payout direction D2 by the spindle 70, the ratchet teeth 83 of the lock ring 80 engage with the claw portion 324 of the pawl 32, thereby constraining the lock ring 80 to the frame 30 and stopping the rotation of the lock ring 80 in the payout direction D2. In this way, relative rotation between the locking ring 80 and the spindle 70 then occurs.

Furthermore, when relative rotation occurs between the lock ring 80 and the spindle 70, the stopper 90 rotates together with the spindle 70 relative to the lock ring 80. In this way, by counting the number of rotations of the stopper 90 relative to the lock ring 80, the payout rotational speed of the spindle 70 in the payout direction D2 following the operation of the pretensioner 20 can be detected.

Furthermore, when the lock ring 80 stops, the mounting pin 78 of the spindle 70 is sheared by the mounting hole 818 of the stopped lock ring 80. In this way, the connection of lock ring 80 with the spindle 70 is released.

### (Stopper 90)

The stopper 90 is an example of a configuration for stopping the payout rotation of the spindle 70 The stopper 90, as illustrated in FIGS. 2 and 4, is provided between the inner peripheral surface 820 of the lock ring 80 and the outer peripheral Torx portion 77 provided at the outer peripheral surface of the opening end of the spindle 70. Furthermore, the stopper 90 has a ring shape. As illustrated in FIGS. 1, 2, and 4, the stopper 90 has a stopper outer peripheral surface 910 that is capable of rotating relative to the lock ring 80, and a stopper inner peripheral surface 920 that engages with the outer peripheral Torx portion 77 of the spindle 70.

As illustrated in FIGS. 1 and 4, the stopper inner peripheral surface 920 is provided with an inner peripheral Torx portion 97 for engaging with the outer peripheral Torx portion 77 of the spindle 70. The stopper 90 is provided so as to be movable, without relative rotation with the spindle 70, by the engagement between the inner peripheral Torx portion 97 and the outer peripheral Torx portion 77 of the spindle 70. Therefore, the stopper 90 can rotate together with the spindle 70.

The stopper outer peripheral surface 910 is provided with the external thread 94, as illustrated in FIGS. 1 and 4, which screws together with the internal thread 84 of the lock ring 80. When the spindle 70 rotates in the payout direction D2 relative to the lock ring 80, the stopper 90 is screwed along the internal thread 84 of the lock ring 80 from the other end 82 to the one end 81 of the lock ring 80 so as to approach the second end surface 811b of the lock ring 80, and the stopper moves in the direction away from the outer peripheral Torx portion 77 of the spindle 70. Furthermore, as illustrated in FIGS. 1 to 3, when an end surface 901 of the end portion 911 of the stopper 90 makes contact with the second end surface 811b of the lock ring 80, the rotation of the stopper 90 is restricted by the lock ring 80, and the rotation of the stopper 90 is stopped. Accordingly, the payout rotation of the spindle 70, which is engaged with the stopper 90, is also stopped.

### <Operation of Spindle Assembly 10>

Next, the operation of the spindle assembly 10 during a vehicle collision will be described in detail with reference to FIGS. 1 to 7F.

As described above, the spindle assembly 10 is configured such that, during a vehicle collision, the spindle assembly 10 performs a winding rotation due to the operation of the pretensioner 20, and thereafter, the winding rotation of the spindle assembly 10 is stopped by the cessation of the operation of the pretensioner 20, payout rotation of a part of the spindle assembly 10 is performed, then the operation of the entire spindle assembly 10 is stopped. Therefore, hereinafter a detailed description will be given of the operation of the spindle assembly 10 during a vehicle collision, in the following order as relates to the spindle assembly 10: the "winding process" during the operation of the pretensioner 20, the "state immediately after the winding stops" following the cessation of the operation of the pretensioner 20, the "payout process", and the "operation stopped state".

### [During Operation of Pretensioner 20]

### (Winding Process)

During a vehicle collision, the spindle assembly 10 is rotated in the winding direction D1 by the pretensioner 20 so as to wind the seatbelt, thus initiating the winding process. In the winding state, the force from the pretensioner 20 is output along the transmission path, being transmitted to the spindle 70 in the following order: the tread head 40, the first bar 51 of the torsion bar 50, and the sleeve 60. Then, the spindle 70 is rotated in the winding direction D1 by that force.

In this case, the second bar 52, which is connected to the first bar 51, is also rotated in the winding direction D1 by the rotation of the first bar 51 in the winding direction D1. Furthermore, the second spindle-side end portion 54 and the second sleeve-side end portion 56 of the second bar 52 are respectively fixed to the spindle 70 and the first bar 51. Since the first bar 51 and the spindle 70 each rotate in the winding direction D1, the second bar 52 is unable to be twisted. Furthermore, due to the winding rotation of the spindle 70, the stopper 90 and the lock ring 80, which are engaged with the spindle 70, are also rotated in the winding direction D1 along with the rotation of the spindle 70.

Furthermore, in the winding process, the first engagement portion 623 of the sleeve 60 and the first sleeve-side end portion 55 of the first bar 51 are coupled. The sleeve 60 is coupled to the first bar 51 by the coupling between the first engagement portion 623 and the first sleeve-side end portion 55. Then, the sleeve 60 is rotated in the winding direction D1 by the first bar 51.

Furthermore, in the winding process, the second engagement portion 626 of the sleeve 60 is engaged with the second engagement receiving portion 76 of the spindle 70. The sleeve 60 is coupled to the spindle 70 by a second coupling between the second engagement portion 626 and the second engagement receiving portion 76. Thus, the sleeve 60 transmits the winding rotation of the first bar 51 to the spindle 70, and the spindle 70 is rotated in the winding direction D1.

Furthermore, in the winding process, the protrusion 612 of the sleeve 60 and the cam 812 of the lock ring 80 are each rotated in the winding direction D1 at the same speed due to the respective winding rotations of the sleeve 60 and the spindle 70. As a result, the protrusion 612 does not move along the cam 812, and the sleeve 60 does not move in the direction away therefrom.

Furthermore, in the winding process, the mounting pin 78 of the spindle 70 is coupled to the mounting hole 818 of the lock ring 80. Since the spindle 70 and the lock ring 80 rotate in the winding direction D1 at the same speed, the mounting pin 78 is not sheared, and the lock ring 80 performs winding rotation together with the spindle 70.

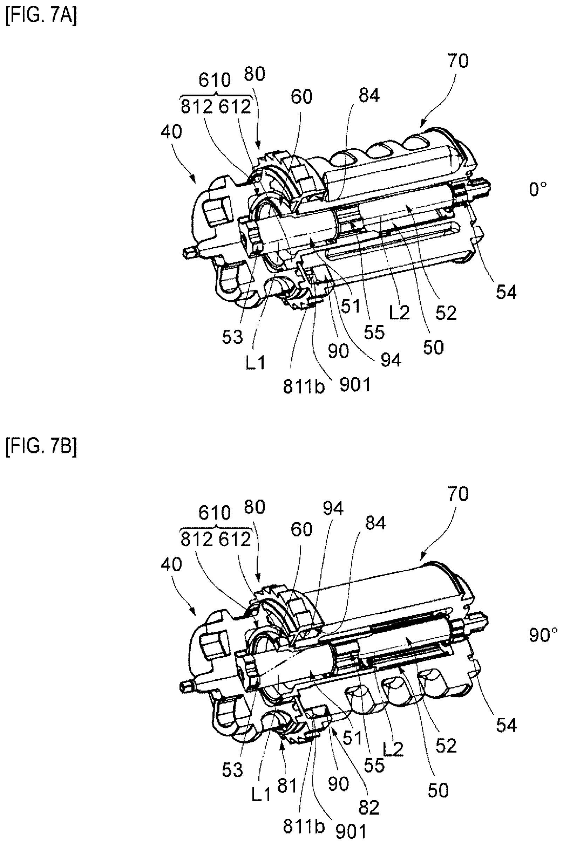

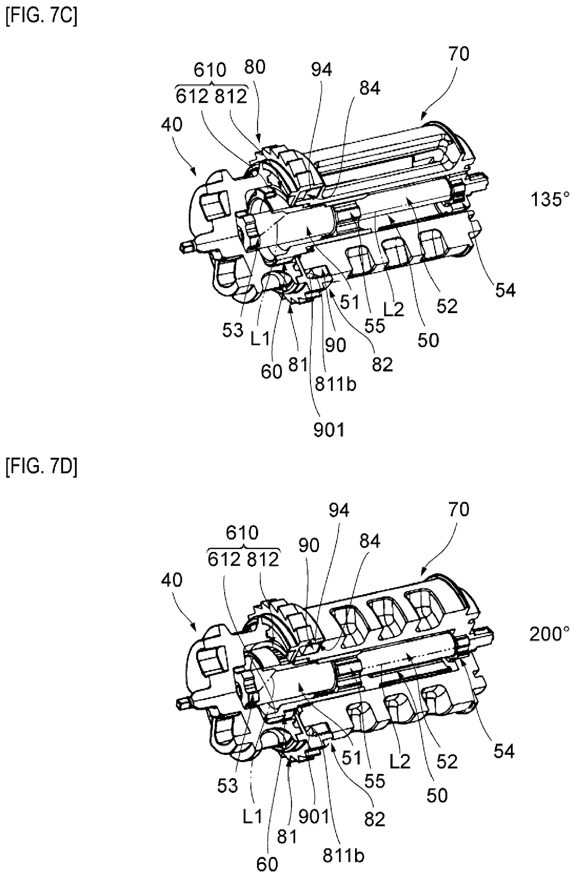

Furthermore, in the winding process, the stopper 90, as illustrated in FIG. 7A, is positioned on the other end 82 side of the lock ring 80. Since the stopper 90 and the lock ring 80 are rotated in the winding direction D1 at the same speed by the spindle 70, no relative rotation occurs between the stopper 90 and the lock ring 80. Therefore, the stopper 90 does not move toward the second end surface 811b of the lock ring 80 along the internal thread 84 of the lock ring 80.

Furthermore, in the winding process, as illustrated in FIG. 5B, the ratchet teeth 83 of the lock ring 80 do not engage with the claw portion 324 of the pawl 32, and are in contact with the flat portion 325 of the pawl 32, which continues to rotate in the winding direction D1 while elastically deflecting the pawl portion 324 of the pawl 32. That is, the ratchet teeth 83 of the lock ring 80 and the pawl 32 permit winding rotation of the lock ring 80.

### [After Operation of Pretensioner 20 is Stopped]

### (State Immediately after Winding is Stopped)

Subsequently, when the operation of the pretensioner 20 is stopped, the output from the pretensioner 20 to the transmission path is stopped. The cessation of the output stops the rotation of each configuration of the spindle assembly 10 in the winding direction D1.

Then, when the spindle 70 begins to rotate in the payout direction D2 due to the load of the occupant applied to the seatbelt, the lock ring 80, which is engaged with the spindle 70, also begins to rotate in the payout direction D2. On the other hand, when the lock ring 80 slightly rotates in the payout direction D2, the ratchet teeth 83 of the lock ring 80 rotate from the flat portion 325 of the pawl 32 toward the claw portion 324 and engage with the claw portion 324, as illustrated in FIG. 5C. Through such engagement, the lock ring 80 is constrained by the frame 30, thereby suppressing rotation of the lock ring 80 in the payout direction D2.

Furthermore, when the lock ring 80 is constrained by the frame 30 due to the pawl 32, a stopper device operates to stop the tread head 40 so that the position thereof relative to the frame 30 does not vary. In this way, the winding rotation of the tread head 40 is caused to be stopped. Furthermore, when the tread head 40 stops, the first bar 51, the sleeve 60, and the spindle 70, which are provided in the transmission path, are sequentially stopped.

In this case, since both the first bar 51 and the spindle 70 are stopped, the second bar 52 is not twisted. Furthermore, since both the tread head 40 and the spindle 70 are stopped, the first bar 51 is not twisted.

### (Payout Process)

Subsequently, the spindle 70 continues to rotate in the payout direction D2 due to the load of the occupant applied to the seatbelt. In this case, since the lock ring 80 is constrained by the frame 30, the mounting pin 78 is sheared by the wall portion of the mounting hole 818 by the rotation of the spindle 70, and the connection between the spindle 70 and the lock ring 80 is released. When the spindle 70 separates from the locking ring 80, relative rotation between the two occurs.

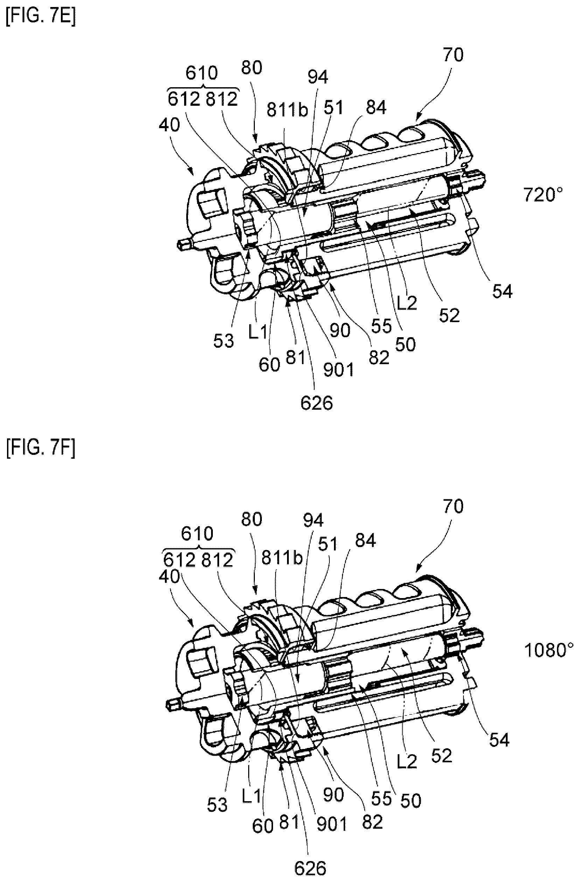

Furthermore, in the payout process, the sleeve 60 separates from the spindle 70 after a predetermined stroke, once the payout rotation of the spindle 70 begins. In the following description, the period from the start of the payout rotation of the spindle 70 illustrated in FIG. 7A to 7D to the time of separation of the sleeve 60 and the spindle 70 is referred to as the "first interval", and the period from the separation of the sleeve 60 and the spindle 70 illustrated in FIG. 7E and 7F to the cessation of the payout rotation of the spindle 70 is referred to as the "second section".

### (First Interval)

During the first interval, the protrusion 612 of the sleeve 60 begins to interfere with a contact portion 813 of the cam 812 of the lock ring 80 due to the payout rotation of the spindle 70 while rotating in the payout direction D2 along with the spindle 70. That is, the moving portion 610 begins to function. Here, the interference between the protrusion 612 and the contact portion 813 of the cam 812 means that the protrusion 612 makes contact with the contact portion 813 of the lock ring 80, which is stopped, and rotates relative to the lock ring 80. Due to the interference between the protrusion 612 and the cam 812, the sleeve 60 is moved in the first direction (refer to FIG. 1) away from the spindle 70.

More specifically, in the first interval, by the moving portion 610 functioning due to the payout rotation of the spindle 70, a second movement state is assumed in which the second engagement portion 626 of the sleeve 60 moves in the first direction (refer to FIG. 1) relative to the second engagement receiving portion 76 of the spindle 70 while in contact with the second engagement receiving portion 76. Then the sleeve 60, in a state in which the coupling with the spindle 70 is maintained, is moved in the first direction (refer to FIG. 1) along the second engagement receiving portion 76 by the operation of the moving portion 610 while being rotated in the payout direction D2 by the payout rotation of the spindle 70 due to the second movement state of the second engagement portion 626 and the second engagement receiving portion 76.

Furthermore, in the first interval, by the moving portion 610 operating due to the payout rotation of the spindle 70, the first engagement portion 623 of the sleeve 60 assumes a first movement state in which it moves in a first direction (refer to FIG. 1) relative to the first sleeve-side end portion 55 of the first bar 51. Then the sleeve 60, due to the first movement state of the first engagement portion 623 and the first sleeve-side end portion 55, transmits the payout rotation of the spindle 70 to the first sleeve-side end portion 55 of the first bar 51 while moving in the direction away therefrom.

In this case, in the first bar 51, the first head-side end portion 53 is coupled to the tread head 40, and has first sleeve-side end portion 55 is subjected to a force in the payout direction by the load of the occupant, which is transmitted sequentially through the spindle 70 and the sleeve 60. As a result, the first bar 51 is twisted from the first sleeve-side end portion 55, as illustrated by the reference line L1 of the first bar 51 in FIG. 7B to 7D. On the other hand, in this case, the second sleeve-side end portion 56 of the second bar 52 is attached to the spindle 70 via the sleeve 60, and the second spindle-side end portion 54 of the second bar 52 is coupled to the spindle 70. That is, both ends of the second bar 52 are fixed to the spindle 70. Therefore, as illustrated by the reference line L2 of the second bar 52 in FIG. 7B to 7D, the second bar 52 is not twisted by the payout rotation of the spindle 70.

Furthermore, in the first interval, as illustrated in FIG. 7B to 7D, the stopper 90 is screwed along the internal thread 84 of the lock ring 80 from the other end 82 toward the one end 81 of the lock ring 80 by the payout rotation of the spindle 70, and moves in the direction away therefrom along the outer peripheral Torx portion 77 of the spindle 70. Then, the stopper 90 approaches the second end surface 811b of the lock ring 80. In this way, in the first interval, the load of the occupant applied to the seatbelt is transmitted in the following order: the spindle 70, the sleeve 60, the first bar 51, and the tread head 40.

### (Second Interval)

When the protrusion 612 passes the contact portion 813 of the cam 812, the sleeve 60 separates from the spindle 70. In the second interval, the sleeve 60 is separated from the spindle 70, thereby stopping the rotation in the payout direction D2 and the movement in the first direction (refer to FIG. 1).

More specifically, in the second interval, the relative rotation between the protrusion 612 and the cam 812 comes to a stop. In this case, the second engagement portion 626 of the sleeve 60 and the second engagement receiving portion 76 of the spindle 70 do not make contact with each other. That is, the sleeve 60 and the spindle 70 are in a disengaged state as illustrated in FIGS 7E and 7F.

In this disengaged state, the spindle 70 transmits the load of the occupant to the second bar 52 via the engagement between the groove 75 and the second spindle-side end portion 54 of the second bar 52, and then, through the coupling between the second sleeve-side end portion 56 of the second bar 52 and the first sleeve-side end portion 55 of the first bar 51, further transmits the load of the occupant to the first bar 51. In this process, the second bar 52, which has a low torsional rigidity, is twisted by the transmitted load of the occupant, as illustrated in FIG. 7E and 7F. Meanwhile, the first bar 51 undergoes the action of a twisting force due to the transmitted load of the occupant, however, because the torsional rigidity of the first bar 51 is higher than that of the second bar 52, the reference line L1 of the first bar 51 illustrated in FIG. 7D is, as illustrated in FIG. 7E and 7F, in a state of not being further twisted compared to the reference line L1 of the first bar 51. In other words, the twisting of the first bar 51 due to the load of the occupant terminates at the end of the first interval, while in the second section, the second bar 52 is twisted and the load of the occupant is absorbed.

Furthermore, in the second interval, as illustrated in FIG. 7F, the stopper 90 is screwed along the internal thread 84 of the lock ring 80 from the other end 82 to the second end surface 811b of the one end 81 of the lock ring 80 by the payout rotation of the spindle 70, and continues to move in the direction away therefrom along the outer peripheral Torx portion 77 of the spindle 70.

In this way, in the second interval, the load of the occupant applied to the seatbelt is transmitted in the following order: the spindle 70, the second bar 52, the first bar 51, and the tread head 40. Compared to the transmission of the load of the occupant in the first interval, the separation between the sleeve 60 and the spindle 70 in the second interval allows the torsional torque from the torsion bar 50 to be switched, after the operation of the pretensioner 20 stops, from the first bar 51 having high torsional rigidity to the second bar 52 having low torsional rigidity. In other words, due to the lock ring 80 causing the sleeve 60 to move in the first direction (refer to FIG. 1) to bring about a separation from the spindle 70, switching of the functioning torsion bar, that is, switching between the first bar 51 and the second bar 52, is readily achieved, enabling reduced torsional torque by the torsion bar.

### (Operation Stopped State)

Subsequently, as illustrated in FIG. 7F, when the end surface 901 of the stopper 90 comes into contact with the second end surface 811b of the lock ring 80, the stopper 90 is stopped by relative rotation with respect to the lock ring 80 being restricted by the second end surface 811b of the lock ring 80. Then, the payout rotation of the spindle 70, which is engaged with the stopper 90, is also stopped, and the operation of the spindle assembly 10 stops.

Furthermore, in the stopped state of the spindle assembly 10 operation, the load of the occupant applied to the seatbelt continues to be applied to the spindle 70. In this case, the load of the occupant applied to the seatbelt is transmitted to the frame 30 in the following order: the spindle 70, the external thread 94 of the stopper 90, the internal thread 84 of the lock ring 80, the ratchet teeth 83 of the lock ring 80, and the pawl 32.

As described above, the seatbelt retractor 1 according to the first embodiment includes a frame 30, a spindle 70 around which a belt is wound, a pretensioner 20 that operates to transmit a force, which rotates the spindle 70 in the winding direction D1, to the spindle 70 via a transmission path, a tread head 40 that is provided in the transmission path and rotates in the winding direction upon receiving force from the pretensioner 20, a torsion bar 50 that is provided in the transmission path and transmits the rotation of the tread head 40 caused by the pretensioner 20 to the spindle 70, and a lock ring 80 provided between the tread head 40 and the spindle 70, wherein the spindle 70 is configured to rotate in the winding direction during operation of the pretensioner 20, and, after the operation of the pretensioner 20 stops, to rotate in the payout direction D2 by the load of the occupant being applied to the belt, the lock ring 80 is configured to rotate in the winding direction together with the spindle 70 during the operation of the pretensioner 20, and, after the operation of the pretensioner 20 stops, to rotate in the payout direction D2 due to the payout rotation of the spindle 70, and then to be constrained by the frame 30. As a result, the payout rotation speed of the spindle can be calculated based on the relative rotation between the lock ring and the spindle by a lock ring having a simple configuration. Furthermore, by suppressing the occurrence of relative rotation between the lock ring and the spindle during the operation of the pretensioner, even if pre-twisting of the torsion bar occurs during the operation of the pretensioner, the pre-twisting will not be calculated as the payout rotation speed of the spindle, thereby enabling suppression of miscalculation of the payout rotation speed of the spindle caused by the pre-twisting of the torsion bar. As a result, the calculation accuracy of the payout rotation speed of the spindle can be increased and the constraining force of the seatbelt on the occupant during a vehicle collision can be increased.

Furthermore, in the seatbelt retractor 1 according to the first embodiment described above, the lock ring 80 is attached to the spindle 70 without relative rotation during the operation of the pretensioner 20 so as to be rotated in the winding direction D1 by the spindle 70, and is configured so as to be constrained by the frame 30 by the payout rotation of the spindle 70 after the operation of the pretensioner 20 stops such that relative rotation with the spindle 70 occurs and the attachment to the spindle 70 is released. As a result, after the operation of the pretensioner 20 stops, relative rotation between the lock ring 80 and the spindle 70 occurs, whereby the calculation accuracy of the payout rotational speed of the spindle 70 is increased.

Furthermore, in the seatbelt retractor 1 according to the first embodiment described above, a mounting portion for attaching the lock ring 80 to the spindle 70 is further provided, wherein the mounting portion includes the mounting pin 78, which is an example of a first mounting portion provided on the spindle 70, and the mounting hole 818, which is an example of a second mounting portion to be connected with the mounting pin 78, the mounting pin 78 and the mounting hole 818 being connected to each other during the operation of the pretensioner 20, and the connection being released by relative rotation between the lock ring 80 and the spindle 70 after the operation of the pretensioner 20 stops. As a result, engagement and disengagement between the lock ring 80 and the spindle 70 are readily achieved.

Furthermore, in the seatbelt retractor 1 according to the first embodiment, a stopper 90 is further included for stopping the payout rotation of the spindle 70, provided between the lock ring 80 and the spindle 70, and attached to the opening end 71 of the spindle 70 without relative rotation, with the stopper 90 being constrained by the lock ring 80 after a predetermined stroke by the payout rotation of the spindle 70 after the operation of the pretensioner 20 stops. As a result, the payout rotation of the spindle 70 may be stopped using a simplified configuration.

Furthermore, in the seatbelt retractor 1 according to the first embodiment, the lock ring 80 has the end surface plate 811, which is an example of an inner surface end formed on the inner end side of the inner peripheral surface 820, and the stopper 90 is configured, through payout rotation of the spindle 70, to move from the outer end side toward the inner end side of the inner peripheral surface 820 after the operation of the pretensioner 20 stops, with the end surface 901 of the end portion 911 of the stopper 90 making contact with the end surface plate 811 of the lock ring 80, whereby the lock ring 80 is fixed, where the predetermined stroke is a predetermined angle at which the spindle 70 is rotated by the payout rotation until the end surface 901 of the stopper 90 is moved from the outer end side and makes contact with the end surface plate 811 of the lock ring 80. As a result, by fixing the spindle 70 to the lock ring 80, the payout rotation of the spindle 70 may be stopped in a simple manner.

Furthermore, in the seatbelt retractor 1 according to the first embodiment described above, the stopper 90 has the external thread 94 provided on the stopper outer peripheral surface 910 and the inner peripheral Torx portion 93 provided on the stopper inner peripheral surface 920, the lock ring 80 has, on the inner peripheral surface 820, the internal thread 84, which screws together with the external thread 94 of the stopper 90, and the spindle 70 has, on the outer peripheral surface 710 of the opening end 71, the outer peripheral Torx portion 77, which screws together with the inner peripheral Torx portion 93 of the stopper 90. As a result, the spindle 70 may be fixed to the lock ring 80 using a simple configuration.

Furthermore, in the seatbelt retractor 1 according to the first embodiment described above, the frame 30 has a pawl 32, which is an example of an engagement portion, and the lock ring 80 has, on the outer peripheral surface 810 of the lock ring 80, the ratchet teeth 83, which are an example of an engagement receiving portion that engages with the pawl 32. As a result, the lock ring can be constrained using a simple configuration.

Furthermore, in the seatbelt retractor 1 according to the first embodiment described above, the pawl 32 is configured so as to not engage with the ratchet teeth 83 of the lock ring 80 when the lock ring 80 is rotating in the winding direction D1, wherein the pawl 32 is caused to freewheel and, when the lock ring 80 rotates in the payout direction D2, engage with the ratchet teeth 83 of the lock ring 80, thereby constraining the lock ring 80. As a result, by suppressing the occurrence of the payout rotation of the lock ring 80 after the operation of the pretensioner 20 stops, it is possible to ensure the occurrence of relative rotation between the lock ring 80 and the spindle 70.

### [Second Embodiment]

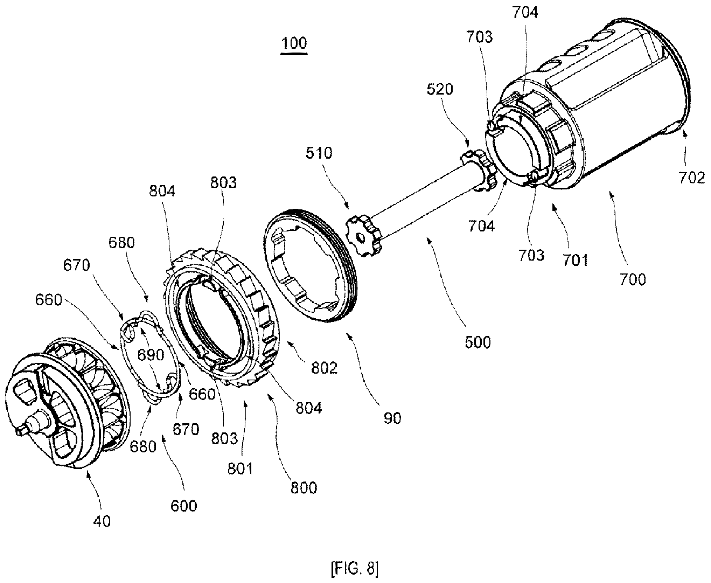

Next, the seatbelt retractor according to the second embodiment will be described with reference to FIGS. 8 to 10. Here, the differences between the seatbelt retractor according to the second embodiment and the seatbelt retractor 1 according to the first embodiment lie in the configuration of a spindle assembly 100, and in an energy-absorbing member 600 provided in the spindle assembly 100. Description hereinafter is centered on the spindle assembly 100 and the energy-absorbing member 600 according to the second embodiment. Note that identical parts to those in the first embodiment are denoted by the same reference numerals, and descriptions thereof are omitted or simplified.

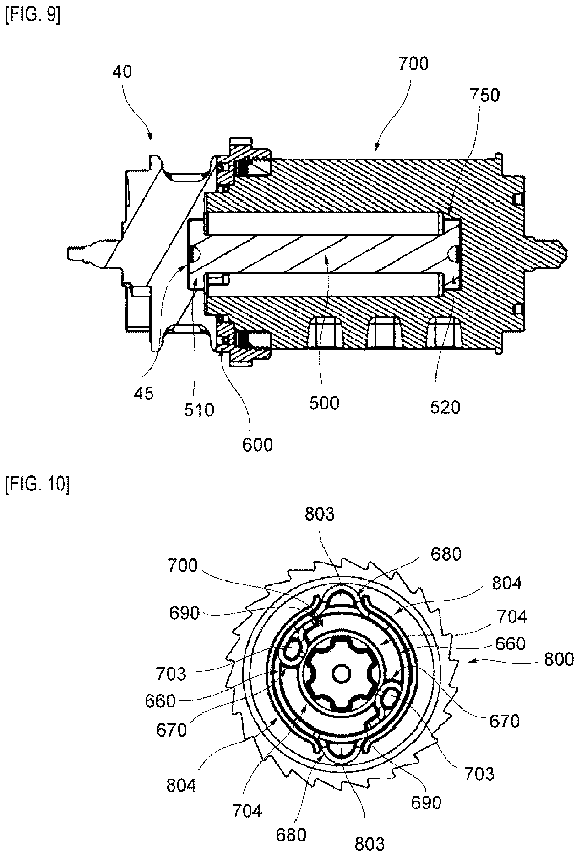

As illustrated in FIGS. 8 and 9, the spindle assembly 100 includes: a spindle 700 around which a seatbelt is wound; the tread head 40, a torsion bar 500, and the energy-absorbing member 600, which are provided in a transmission path configured to transmit force from a pretensioner 20 (not illustrated) to the spindle 700; a lock ring 800 capable of interrupting the transmission path and stopping the winding rotation of the spindle 700; and a stopper 90 capable of stopping the payout rotation of the spindle 700.

In this way, the difference between the spindle assembly 100 according to the second embodiment and the spindle assembly 10 according to the first embodiment is that the spindle assembly 100 according to the second embodiment achieves the same effect as the combination of the first bar 51, the second bar 52, and the sleeve 60 in the payout process of the spindle assembly 10 according to the first embodiment by combining the torsion bar 500 and the energy-absorbing member 600.

The torsion bar 500 is a single bar. In the torsion bar 500, a first end 510 engages with the tread head 40, and a second end 520 engages with a groove 750 formed inside the spindle 700.

The lock ring 800 has a ring shape. As illustrated in FIG. 8, the lock ring 800 has one end 801 and another end 802. Both the one end 801 and the other end 802 are open ends. As illustrated in FIG. 8, the lock ring 800 has a first protrusion 803 and a second protrusion 804, which are provided on an end surface of the one end 801 of the lock ring 800, and are for scraping against the energy-absorbing member 600. The first protrusion 803 and the second protrusion 804 are examples of interference portions that interfere with the energy-absorbing member 600.

The spindle 700 has a cylindrical shape. The spindle 700 has an open end 701 and a closed end 702 on the opposite side of the open end 701. There are, provided on the end surface of the open end 701, a mounting protrusion 703 and a mounting portion 704. The mounting protrusion 703 is an example of a mounting portion that may come into contact with the energy-absorbing member 600 of the spindle 700. The mounting protrusion 703 and the mounting portion 704 of the spindle 700 are positioned inside the lock ring 800 so as to penetrate through the opening at one end 801 of the lock ring 800.

The energy-absorbing member 600 is fixed to the spindle 700 and is an example of a configuration for absorbing energy caused by the payout rotation of the spindle 700 in the payout process. The energy-absorbing member 600 has a ring shape. As illustrated in FIG. 8, the energy-absorbing member 600 has a first mounting portion 660, a second mounting portion 680, and a contact portion 670, which are distributed around the circumference of the ring. The contact portion 670 has an opening 690.

Furthermore, as illustrated in FIG. 10, the energy-absorbing member 600 has a first mounting portion 660 interposed by the mounting portion 704 and the second protrusion 804, the second mounting portion 680 fitted into the first protrusion 803, and a contact portion 670 provided at the opening end 701 of the spindle 700 and at the one end 801 of the lock ring 800 so as to be fitted into the mounting protrusion 703.

In this way, all of the configurations of the spindle assembly 100 perform the winding rotation in the winding process. In this case, the mounting protrusion 703 does not move relative to the contact portion 670, and energy absorption by the energy-absorbing member 600 is not performed. Furthermore, the torsion bar 500 is not twisted.

When the driving force from the pretensioner 20 exceeds a transmission capacity of the torsion bar 500 and the energy-absorbing member 600, pre-twisting by the pretensioner 20 occurs. However, even if the torsion bar 500 and the energy-absorbing member 600 are twisted, the lock ring 800 and the spindle 700 do not undergo relative displacement when rotating in the winding direction D1, so the set stroke does not change.

On the other hand, when the payout process begins, the lock ring 800 is fixed to the frame 30, and the spindle 700 rotates in the payout direction D2. **The** torsion bar 500 is twisted from the second end 520 by the payout rotation of the spindle 700, and the mounting protrusion 703 of the spindle 700 is rotated in the payout direction D2.

Furthermore, in the payout process, the first protrusion 803 of the lock ring 800 is configured such that after the state of interference with the energy-absorbing member 600 is generated in response to a change in the rotation angle of the spindle 70 in the relative rotation of the spindle 70, this state of interference is subsequently released. Specifically, in the payout process, the first protrusion 803 moves towards the opening 690 of the contact portion 670 while making contact with the contact portion 670 of the energy-absorbing member 600, and exits from the opening 690 to the outside of the contact portion 670. As a result, the first protrusion 803 no longer makes contact with the energy-absorbing member 600.

Furthermore, in the contact process in which the first protrusion 803 moves while making contact with the second mounting portion 680, the energy from the payout rotation of the spindle 700 is absorbed by the energy-absorbing member 600, and the load required to twist the torsion bar 500 increases. On the other hand, when the first protrusion 803 exits the opening 690 and moves to the outside of the second mounting portion 680, entering into the non-contact process, the first protrusion 803 does not make contact with the energy-absorbing member 600, and the energy from the payout rotation of the spindle 700 is not absorbed by the energy-absorbing member 600. As a result, the load required to twist the torsion bar 500 is smaller than the load required to twist the torsion bar 500 in the contact process.

According to the second embodiment as such, and similarly to the spindle assembly 10 according to the first embodiment, the spindle assembly 100 according to the second embodiment can, using a simple configuration, suppress miscalculation of the payout rotational speed of the spindle due to the occurrence of the pre-twisting of the torsion bar and increase the constraining force of the seatbelt during a vehicle collision, and can realize an adjustment effect of the torsional torque similar to that of the combination of the first bar 51, the second bar 52, and the sleeve 60 in the payout process of the spindle assembly 10 according to the first embodiment by combining the torsion bar 500 and the energy-absorbing member 600.

### [Third Embodiment]

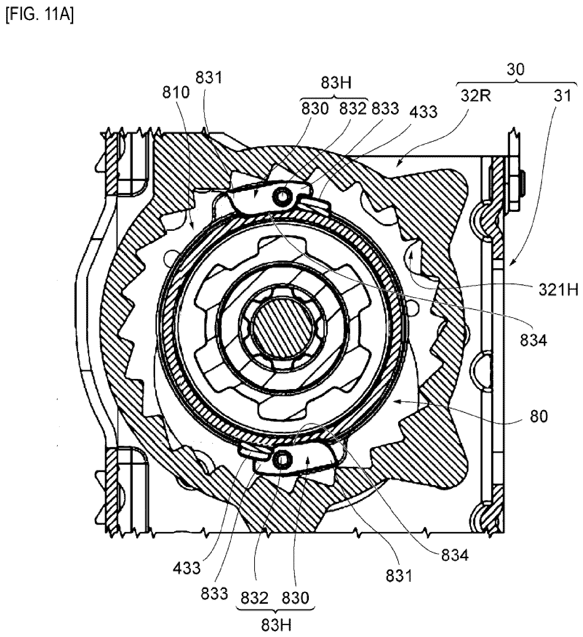

Next, a seatbelt retractor according to a third embodiment will be described with reference to FIG. 11A to 11C. Here, the difference between the seatbelt retractor according to the third embodiment and the seatbelt retractor 1 according to the first embodiment lies in the configuration related to the engagement between the lock ring 80 and the frame 30. Description hereinafter is centered around the configuration related to the engagement between the lock ring 80 and the frame 30 according to the third embodiment. Note that identical parts to those in the first embodiment are denoted by the same reference numerals, and descriptions thereof are omitted or simplified.

As illustrated in FIG. 11A, the frame 30 includes a frame body 31 and a latch ring 32R with which the frame body 31 is provided. The latch ring 32R is a configuration for restricting the rotational direction of the lock ring 80. The latch ring 32R is configured with ratchet teeth 321H on an inner peripheral surface thereof. The ratchet teeth 321H are configured to engage with a tooth portion 831 of the ring pawl 83H of the lock ring 80, which will be described later. Note that, in the third embodiment, the latch ring 32R has been described as part of the frame 30, but is not limited thereto. The latch ring 32R may be a separate member from that of the frame 30.

As illustrated in FIG. 11A, the lock ring 80 has a ring pawl 83H provided on the outer peripheral surface 810 of the ring. The ring pawl 83H is an example of an engagement receiving portion that can engage with the ratchet teeth 321H of the latch ring 32R of the frame body 31. As illustrated in FIG. 11A, the ring pawl 83H includes a pawl body 830, a rotation shaft 832 for attaching the pawl body 830 to the outer peripheral surface 810 of the lock ring 80, and a biasing mechanism that is not illustrated. Furthermore, the pawl body 830 has the tooth portion 831 provided on one side of the rotation shaft 832, an end portion 833 provided on the other side of the rotation shaft 832, and an inner side surface 834. The pawl body 830 is configured to be rotatable around the rotation shaft 832 as the central axis. The biasing mechanism has a configuration for biasing the force, which causes the tooth portion 831 of the ring pawl to rotate to the latch ring side, towards the end portion 833.

The end portion 833 is configured so as to be biased, by a biasing mechanism that is not illustrated, towards the ratchet teeth 321H of the latch ring 32R. In the normal state, the end portion 833 is positioned at a first position whereat a protrusion 433 of the tread head 40 makes contact, as illustrated in FIG. 11A. In this case, the end portion 833 is pressed against the protrusion 433 by the biasing force of the biasing mechanism. Due to the contact between the end portion 833 and the protrusion 433, the tooth portion 831 of the pawl body 830 is kept in a position where no engagement with the ratchet teeth 321H of the latch ring 32R is made.

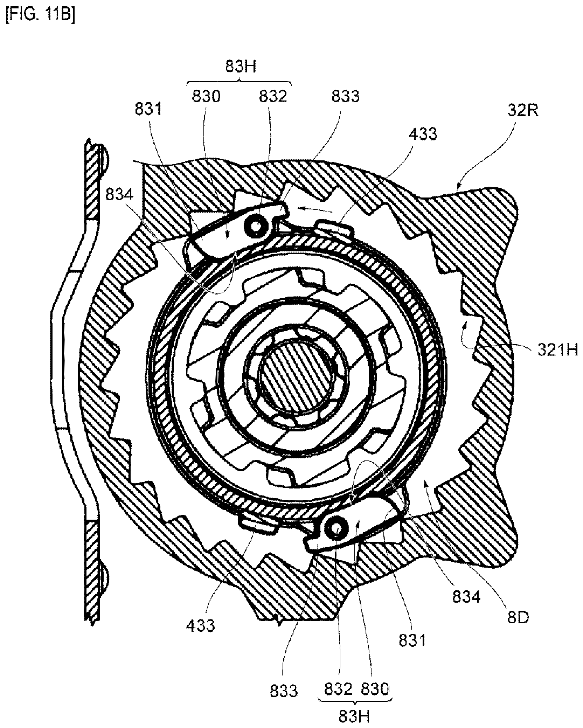

On the other hand, as illustrated in FIG. 11B, when the end portion 833 has moved to a second position where no contact with the protrusion 433 of the tread head 40 is made, the end portion 833 attempts to rotate in a direction where the outer peripheral surface 810 of the lock ring 80 is pressed against due to the biasing of the biasing mechanism.

Here, the movement of the end portion 833 from the first position illustrated in FIG. 11A to the second position illustrated in FIG. 11B will be explained. When the end portion 833 rotates together with the spindle 70 while in contact with the protrusion 433 of the tread head 40, there is no relative rotation (phase difference) between the tread head 40 and the spindle 70, so the end portion 833 and the protrusion 433 are positioned at the first position in contact with each other, as illustrated in FIG. 11A. On the other hand, during the operation of the pretensioner 20, when there is a delay in the transmission of force from the pretensioner 20, the spindle 70 begins to rotate with a delay relative to the tread head 40, and relative rotation between the tread head 40 and the spindle 70 occurs. Due to relative rotation as such, the first bar 51 becomes pre-twisted, being fixed at one end to the tread head 40 and at the other end to the sleeve 60, which is coupled to the spindle 70. As a result, the end portion 833 moves from the first position illustrated in FIG. 11A to the second position illustrated in FIG. 11B such that the position with the protrusion 433 is shifted. Furthermore, in this case, since the lock ring 80 and the spindle 70 are rotating in the winding direction D1, the pawl body 830 is biased by the biasing mechanism to a position at which engagement with the ratchet teeth 321H is possible, as illustrated in FIG. 11B, however, the ratchet teeth 321H are not engaged with.

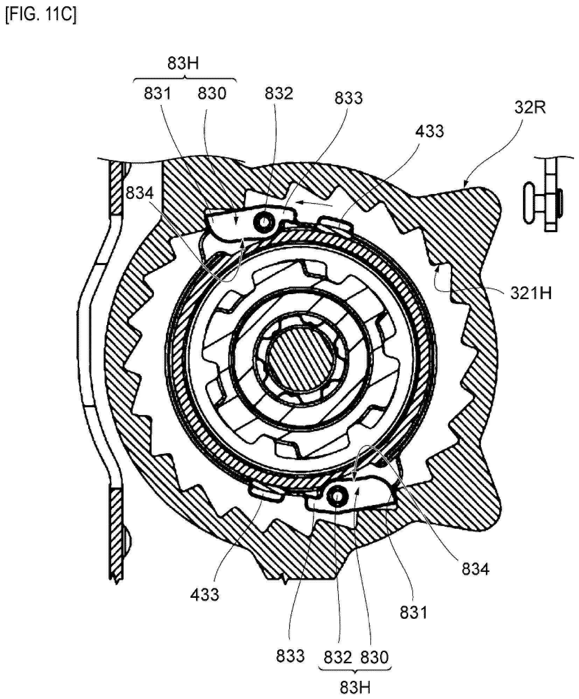

Then, after the operation of the pretensioner 20 stops, as the spindle 70 rotates in the payout direction D2, the pawl body 830 is pushed toward the ratchet teeth 321H by the biasing mechanism, and engages with the ratchet teeth 321H. In this way, as illustrated in FIG. 11C, the lock ring 80 is constrained by the frame 30.

Furthermore, during the operation of the pretensioner 20, if no relative rotation occurs between the tread head 40 and the lock ring 80, the protrusion 433 maintain contact with the end portion 833 without moving. In this case, the torsion bar 50 is engaged with the tread head 40, where the first bar 51 does not vary position relative to the frame 30, and the second bar 52 is provided so as to engage with the groove 75 inside the spindle 70. Therefore, when the spindle 70 rotates in the payout rotation thereafter, the torsion bar 50 begins to twist. As a result, the end portion 833 moves away from the protrusion 433.

Note that, in the above explanation of the third embodiment, the cessation of the operation of the pretensioner 20 operation is described as the trigger for constraining the lock ring 80 to the frame 30, but is not limited only thereto. For example, the occurrence of relative displacement (phase difference) between the tread head 40 and the lock ring 80 may be the trigger.

More specifically, in an emergency, the torsion bar 50 is twisted. Here, the emergency is, for example, during a vehicle collision, and refers to a time when the pretensioner is operated. However, the "emergency" does not refer to the exact timing when the pretensioner starts or stops operating, but rather to a series of periods that includes from the start of pretensioner operation to a predetermined time after the operation stops. Furthermore, the twisting of the torsion bar 50 may be caused by the pre-twisting of the torsion bar 50 due to the operation of the pretensioner 20, or may be caused by the twisting of the torsion bar 50 due to the load of an occupant placed on the seatbelt during a vehicle collision. When twisting of the torsion bar 50 occurs, relative rotation (phase difference) occurs between the tread head 40 and the spindle 70 (lock ring 80). Then, as the spindle 70 rotates in the payout direction, the lock ring 80 rotates integrally with the spindle 70, causing the ring pawl 83H to disengage from the tread head 40 and engage with the ratchet teeth 321H of the latch ring 32R. The lock ring 80 is constrained by the frame 30 due to this engagement. The details of the operations thereafter are the same as those of the first embodiment.

According to the third embodiment as such, the spindle assembly 10 according to the third embodiment, similarly to the spindle assembly 10 according to the first embodiment, uses a simple configuration to suppress miscalculation in the payout rotational speed of the spindle caused by the occurrence of pre-twisting of the torsion bar, enable increased seatbelt constraining force during a vehicle collision, and allow for operation of the ring pawl 83H of the lock ring 80 depending on the presence or absence of relative rotation between the tread head 40 and the lock ring 80.

### <Additional Considerations for Various Implementations>

### [First Embodiment]

A seatbelt retractor, including:
a frame;
a spindle around which the belt is wound;
a pretensioner that operates to transmit a force, which causes the spindle to rotate in the winding direction of the belt, to the spindle via a transmission path; a tread head that is provided in the transmission path and rotates in the winding direction upon receiving the force from the pretensioner;
a torsion bar that is provided in the transmission path and transmits the rotation of the tread head caused by the pretensioner to the spindle; and
a lock ring provided between the tread head and the spindle, wherein
the spindle is configured to rotate in the winding direction during operation of the pretensioner, and, after the operation of the pretensioner stops, to rotate in the payout direction by the load of the occupant being applied to the belt,
and the lock ring is configured to rotate in the winding direction together with the spindle during the operation of the pretensioner, and, after the operation of the pretensioner stops, is constrained by the frame when rotating in the payout direction due to the payout rotation of the spindle.

### [Second Embodiment]

The seatbelt retractor of the first embodiment, wherein the lock ring
is attached to the spindle without relative rotation so as to be rotated in the winding direction by the spindle during operation of the pretensioner, and is configured so as to be constrained by the frame due to the payout rotation of the spindle after the operation of the pretensioner stops, and the attachment to the spindle is released, such that relative rotation with the spindle is caused to occur.

### [Third Embodiment]

The seatbelt retractor of the second embodiment, further including a mounting portion for mounting the lock ring to the spindle, wherein
the mounting portion has a first mounting portion provided on the spindle and a second mounting portion connected to the first mounting portion, and
the first and second mounting portions are connected to each other during the operation of the pretensioner, being configured such that the connection is released by the relative rotation between the lock ring and the spindle after the operation of the pretensioner stops.

### [Fourth Embodiment]

The seatbelt retractor of the third embodiment, further including a stopper for stopping the payout rotation of the spindle, wherein
the stopper is provided between the lock ring and the spindle, is attached to an open end of the spindle without relative rotation, and is configured to be constrained by the lock ring after a predetermined stroke due to the payout rotation of the spindle after the operation of the pretensioner stops.

### [Fifth Embodiment]

The seatbelt retractor of the fourth embodiment, wherein the lock ring has an end surface portion, the stopper is configured to be moved toward the end surface portion by the payout rotation of the spindle after the operation of the pretensioner stops, and to be constrained by the lock ring when an end surface of the stopper makes contact with the end surface portion, and
the predetermined stroke is a predetermined angle at which the spindle is rotated by the payout rotation from the time that the operation of the pretensioner stops until the end surface of the stopper makes contact with the end surface portion.

### [Sixth Embodiment]

The seatbelt retractor of the fourth embodiment, wherein the stopper has an external thread provided on a stopper outer peripheral surface and an internal Torx portion provided on a stopper inner peripheral surface,
the lock ring has, on a ring inner peripheral surface, an internal thread that screws together with the external thread of the stopper, and
the spindle has, on the outer peripheral surface of the open end, an external Torx portion that engages with the internal Torx portion of the stopper.

### [Seventh Embodiment]

The seatbelt retractor of the first embodiment, wherein the frame has an engagement portion, and
the lock ring has, on the outer peripheral surface of the lock ring, an engagement receiving portion that engages with the engagement portion.

### [Eighth Embodiment]

The seatbelt retractor of the seventh embodiment, wherein
the engagement portion is configured such that, when the lock ring is rotating in the winding direction, the lock ring does not engage with the engagement receiving portion of the lock ring, and causes the engagement receiving portion to freewheel, and
when the lock ring rotates in the payout direction, the lock ring engages with the engagement receiving portion of the lock ring, and thereby constrains the lock ring.

### [Ninth Embodiment]

A seatbelt retractor, including:
a frame;
a spindle around which the belt is wound;
a pretensioner that operates to transmit a force, which causes the spindle to rotate in the winding direction of the belt, to the spindle via a transmission path; a tread head that is provided in the transmission path and rotates in the winding direction upon receiving the force from the pretensioner;
a torsion bar that is provided in the transmission path and transmits the rotation of the tread head caused by the pretensioner to the spindle; and
a lock ring provided between the tread head and the spindle, wherein,
in an emergency, relative displacement occurs between the spindle and the tread head due to twisting of the torsion bar, and when the spindle rotates in the payout direction of the belt due to a load of the occupant applied to the belt, the lock ring integrally rotates with the spindle due to the payout rotation of the spindle and is constrained by the frame.

### [Tenth Embodiment]

The seatbelt retractor of embodiment 9, wherein the lock ring is provided with a ring pawl,
the frame is provided with ratchet teeth,
the ring pawl and the ratchet teeth do not engage before the relative displacement occurs, and
when the relative displacement occurs and the lock ring rotates integrally with the spindle, the ring pawl engages with the ratchet teeth, whereby the lock ring is constrained by the frame.

### DESCRIPTION OF REFERENCE NUMERALS

1... seatbelt retractor, 10, 100... spindle assembly, 20... pretensioner, 21... drive device, 22... drive cover, 23... distance plate, 24... tube housing, 25... gas generator, 26... spring, 27... piston, 28...balls, 29... cap, 30... frame, 31... frame body, 32R... latch ring, 321... pawl body, 40... tread head, 41... closed end, 42... open end, 43, 410... pinion, 44... internal space, 45... groove, 46... first mounting portion, 50, 500... torsion bar, 433... protrusion, 51... first bar, 52... second bar, 53... first head-side end portion, 54... second spindle-side end 55... first sleeve-side end 56... second sleeve-side end portion, 57... groove, 60... sleeve, 70, 700... spindle, 71... open end, 72... closed end, 73... mounting portion, 74... internal space, 75... groove, 76... second engagement receiving portion, 77... outer peripheral Torx portion, 80, 800... lock ring, 83H... ring pawl, 83... ratchet-teeth, 831... tooth portion, 90... stopper, 500... torsion bar, 600... energy-absorbing member, 610... moving portion, 910... stopper outer peripheral surface, 920... stopper inner peripheral surface, 600... energy-absorbing member, 612... protrusion, 812... cam, D1... winding direction, D2... payout direction

## Claims

1. A seatbelt retractor, comprising:
a frame;
a spindle around which a belt is wound;
a pretensioner that operates to transmit a force, which causes the spindle to rotate in a winding direction of the belt, to the spindle via a transmission path;
a tread head that is provided in the transmission path and rotates in the winding direction upon receiving the force from the pretensioner;
a torsion bar that is provided in the transmission path and transmits the rotation of the tread head caused by the pretensioner to the spindle; and
a lock ring provided between the tread head and the spindle, wherein
the spindle is configured to rotate in the winding direction during operation of the pretensioner, and, after the operation of the pretensioner stops, to rotate in a payout direction by a load of an occupant being applied to the belt,
and the lock ring is configured to rotate in the winding direction together with the spindle during the operation of the pretensioner, and, after the operation of the pretensioner stops, is constrained by the frame when rotating in the payout direction due to payout rotation of the spindle.

2. The seatbelt retractor according to claim 1, wherein the lock ring
is attached to the spindle without relative rotation so as to be rotated in the winding direction by the spindle during operation of the pretensioner, and
is configured so as to be constrained by the frame due to the payout rotation of the spindle after the operation of the pretensioner stops, and the attachment to the spindle is released, such that relative rotation with the spindle is caused to occur.

3. The seatbelt retractor according to claim 2, further comprising a mounting portion for mounting the lock ring to the spindle, wherein
the mounting portion has a first mounting portion provided on the spindle and a second mounting portion connected to the first mounting portion, and
the first and second mounting portions are connected to each other during the operation of the pretensioner, being configured such that the connection is released by the relative rotation between the lock ring and the spindle after the operation of the pretensioner stops.

4. The seatbelt retractor according to claim 3, further comprising a stopper for stopping the payout rotation of the spindle, wherein
the stopper is provided between the lock ring and the spindle, is attached to an open end of the spindle without relative rotation, and is configured to be constrained by the lock ring after a predetermined stroke due to the payout rotation of the spindle after the operation of the pretensioner stops.

5. The seatbelt retractor according to claim 4, wherein
the lock ring has an end surface portion,
the stopper is configured to be moved toward the end surface portion by the payout rotation of the spindle after the operation of the pretensioner stops, and to be constrained by the lock ring when an end surface of the stopper makes contact with the end surface portion, and
the predetermined stroke is a predetermined angle at which the spindle is rotated by the payout rotation from a time that the operation of the pretensioner stops until the end surface of the stopper makes contact with the end surface portion.

6. The seatbelt retractor according to claim 4, wherein
the stopper has an external thread provided on a stopper outer peripheral surface and an internal Torx portion provided on a stopper inner peripheral surface,
the lock ring has, on a ring inner peripheral surface, an internal thread that screws together with the external thread of the stopper, and
the spindle has, on an outer peripheral surface of the open end, an external Torx portion that engages with the internal Torx portion of the stopper.

7. The seatbelt retractor according to claim 1, wherein the frame has an engagement portion and the lock ring has, on an outer peripheral surface of the lock ring, an engagement receiving portion that engages with the engagement portion.

8. The seatbelt retractor according to claim 7, wherein
the engagement portion is configured such that, when the lock ring is rotating in the winding direction, the lock ring does not engage with the engagement receiving portion of the lock ring, and causes the engagement receiving portion to freewheel, and
when the lock ring rotates in the payout direction, the lock ring engages with the engagement receiving portion of the lock ring, and thereby constrains the lock ring.

9. A seatbelt retractor, comprising:
a frame;
a spindle around which a belt is wound;
a pretensioner that operates to transmit a force, which causes the spindle to rotate in a winding direction of the belt, to the spindle via a transmission path;
a tread head that is provided in the transmission path and rotates in the winding direction upon receiving the force from the pretensioner;
a torsion bar that is provided in the transmission path and transmits the rotation of the tread head caused by the pretensioner to the spindle; and
a lock ring provided between the tread head and the spindle, wherein,
in an emergency, relative displacement occurs between the spindle and the tread head due to twisting of the torsion bar, and
when the spindle rotates in a payout direction of the belt due to a load of an occupant applied to the belt, the lock ring integrally rotates together with the spindle due to payout rotation of the spindle and is constrained by the frame.

10. The seatbelt retractor according to claim 9, wherein
the lock ring is provided with a ring pawl,
the frame is provided with ratchet teeth,
the ring pawl and the ratchet teeth do not engage before the relative displacement occurs, and
when the relative displacement occurs and the lock ring rotates integrally with the spindle, the ring pawl engages with the ratchet teeth, whereby the lock ring is constrained by the frame.
